# EUROPÄISCHE PATENTSCHRIFT

(11) **EP 0 943 111 B1**
(45) Veröffentlichungstag und Bekanntmachung des Hinweises auf die Patenterteilung: **04.10.2001**
(21) Anmeldenummer: 97951967.5
(22) Anmeldetag: 25.11.1997
(51) Int. Cl.: G02B 6/42

(54) **VORRICHTUNG ZUR OPTISCHEN KOPPLUNG EINES FESTKÖRPERLASERS MIT EINEM LICHTWELLENLEITER UND VERFAHREN ZU DEREN HERSTELLUNG**
DEVICE FOR OPTICAL COUPLING OF A SOLID-STATE LASER WITH AN OPTICAL WAVE GUIDE AND A PROCESS FOR THEIR PRODUCTION
DISPOSITIF DE COUPLAGE OPTIQUE D'UN LASER A CORPS SOLIDE A UNE FIBRE OPTIQUE ET PROCEDE DE PRODUCTION DUDIT DISPOSITIF

(30) Priorität: 06.12.1996 DE 19650696
(43) Veröffentlichungstag der Anmeldung: 22.09.1999
(73) Patentinhaber: Deutsche Telekom AG, 53113 Bonn (DE)
(72) Erfinder: KOOPS, Hans, Wilfried, Peter, D-64372 Ober-Ramstadt (DE)
(74) Vertreter: Gornott, Dietmar, Dipl.-Ing.
(86) Internationale Anmeldenummer: EP9706566
(87) Internationale Veröffentlichungsnummer: WO9825170

(56) Entgegenhaltungen:
- EP-A- 0 706 070
- NL-A- 8 600 844
- US-A- 5 081 639
- US-A- 5 181 224
- PATENT ABSTRACTS OF JAPAN vol. 012, no. 337 (E-657), 12.September 1988 & JP 63 100790 A (NEC CORP), 2.Mai 1988,
- PATENT ABSTRACTS OF JAPAN vol. 010, no. 145 (E-407), 28.Mai 1986 & JP 61 006889 A (MATSUSHITA DENKI SANGYO KK), 13.Januar 1986,

## Beschreibung

Die Erfindung betrifft eine optische Anordnung bestehend aus einem Festkörperlaser, einem Lichtwellenleiter und einem optischen System, wobei das zwischen der Austrittsfläche des Festkörperlasers und der Eintrittsfläche des Lichtwellenleiters angeordnete optische System in den Hauptschnitten des Festkörperlasers unterschiedliche Aperturen in im wesentlichen gleiche Aperturen an der Eintrittsfläche des Lichtwellenleiters umformt, und ein Verfahren zu deren Herstellung.

Zur effizienten Einkopplung von Laserlicht in Lichtwellenleiter, insbesondere in Monomodefasern, ist die möglichst verlustlose Ankopplung des Lichtwellenleiters an den Laser zu erreichen. Dieses kann durch auf das Faserende aufgebrachte Linsen erfolgen. Bei Festkörperlasern soll durch die Ankopplung des Lasers an die Faser ebenfalls möglichst wenig Licht verlorengehen. Dazu ist es beispielsweise aus R. Zengerle, H.J. Brückner, H.W.P. Koops, H.-J. Olzhausen, G. Zesch, A. Kohl, A. Menschig, "Fabrication of optical beamwidth transformers for guided waves on InP using wedge-shaped tapers, J. Vac. Sci. Technol. B9(6), (1991)3459 bekanntgeworden, einen maßgeschneiderten Koppel-Taper an den Laser direkt im Lasermaterial lithographisch zu definieren und einzubauen. Derartige Taper können aber nur in einem Schnitt das Wellenfeld an die Phase anpassen. Im anderen, senkrecht zum Wellenleiter liegenden Schnitt ist aus Gründen des epitaktischen Wachstums und der ebenen Lithographie, die zur Strukturierung angewendet wird, keine Anpassung möglich.

Ferner ist eine Vorrichtung nach der Gattung des Hauptanspruchs aus U. Griebner, R. Grunwald, H. Schönnagel, OSA Proceedings on Advanced Solidstate Lasers, 1995, Vol. 24, 253 bekanntgeworden, die jedoch einen erheblichen Justieraufwand benötigt. Vorrichtungen mit mehreren jeweils zu justierenden und zu fixierenden Linsen sind ferner bekannt aus US 5,140,608, GB 2 220 501 A, DE 39 19 484 A, EP 0 484 276 A, NL 8600844 A und EP 0 706 070 A.

Aufgabe der vorliegenden Erfindung ist es, eine Vorrichtung zur Kopplung eines Festkörperlasers mit einem Lichtwellenleiter vorzuschlagen, die eine weitgehend verlustlose Ankopplung und eine Anpassung der Wellenfelder in Richtung beider Hauptschnitte ermöglicht und die mit der erforderlichen Genauigkeit herstellbar ist.

Diese Aufgabe wird erfindungsgemäß dadurch gelöst, daß das optische System aus einem auf der Austrittsfläche aufgebauten Linsensystem mit unterschiedlichem Abbildungsmaßstab in den Hauptschnitten und einer auf der Eintrittsfläche aufgebauten weiteren Linse besteht und wobei das optische System derart gestaltet ist, eine Anpassung der Wellenfelder in Richtung beider Hauptschnitte zu erreichen.

Die erfindungsgemäße Vorrichtung hat den Vorteil, daß die Linsen jeweils mit sehr hoher Genauigkeit auf die Austritts-bzw. Eintrittsfläche aufgebracht werden können. Eine Justierung ist dann nur noch zwischen der Laser-Achse und der Achse des Lichtwellenleiters erforderlich. Dabei können sowohl das Linsensystem als auch die weitere Linse in vorteilhafter Weise durch bekannte Prozesse hergestellt werden.

Bei der erfindungsgemäßen Vorrichtung ist zwar eine anamorphotische Linse auf der Eintrittsfläche nicht ausgeschlossen, es ist jedoch vorzugsweise vorgesehen, daß die weitere Linse sphärisch ist. Ferner sind bei der Erfindung verschiedene Ausgestaltungen möglich, beispielsweise daß das auf der Austrittsfläche des Lasers aufgebaute Linsensystem eine Fresnel-Linse oder von zwei gekreuzten zylindrischen Teillinsen gebildet ist, wobei mindestens eine der Teillinsen als Fresnel-Linse ausgebildet ist.

Die vorteilhafte Ausführungsform der erfindungsgemäßen Vorrichtung kann ferner derart gestaltet sein, daß zwischen dem Linsensystem und der Austrittsfläche eine Abstandsschicht entsprechend der in der Richtung der größeren Apertur erforderlichen Vergrößerung vorgesehen ist.

Außer einer reellen Abbildung der Austrittspupille des Lasers ist es bei der erfindungsgemäßen Vorrichtung möglich, daß die Austrittspupillen des Lasers virtuell in ein rundes Quellenbild abgebildet werden. Dadurch kann ein kleiner Abstand zwischen den Linsen bzw. der Austrittsfläche und der Eintrittsfläche bei relativ großen Brennweiten der Linsen gewählt werden. Die großen Brennweiten der Linsen sind wiederum günstiger für die Herstellung durch mikrotechnische Verfahren.

Es sind verschiedene bekannte Verfahren grundsätzlich geeignet, wie beispielsweise die Definition der Zylinderlinsen auf der Eintrittsfläche des Lichtwellenleiters mit Hilfe hochauflösender Elektronenstrahl-Lithographie und eine anschließende Herstellung durch reaktives Trockenätzen. Ein solches Verfahren ist beispielsweise in P. Unger, V. Boegli, P. Buchmann, R. Germann "High resolution electron beam lithography for fabricating visible semiconductor lasers with curved mirrors and integrated holograms", Microelectronic Eng. 23, (1994)461 und in P. Unger, V. Boegli, P. Buchmann, R. Germann "Fabrication of curved mirrors for visible semiconductor lasers using electron-beam lithography and chemical assisted ion-beam etching", j. Vac. Sci. Technol, B.11(6) (1993)2514-2518 beschrieben. Ferner ist ein Herausarbeiten aus Lacklinsen, die auf der Eintrittsfläche oder auf der Austrittsfläche aufgebracht sind, möglich.

Besonders vorteilhafte Verfahren zur Herstellung der erfindungsgemäßen Vorrichtung sind in weiteren Unteransprüchen angegeben. Diese Verfahren stellen wesentliche Verbesserungen dar, insbesondere, wenn sie auf programmierter Basis durchgeführt werden. Es ist auch möglich, eine Herstellung der einzelnen Elemente mit verschiedenen Verfahren vorzunehmen.

Mit der Trockenlacktechnik, die beispielsweise in DE 195 31 859.5 A1 beschrieben ist, steht dabei ein Verfahren zur Verfügung, bei dem der Laser oder das Faserende durch Bedampfung im Hochvakuum mit einer definierten Schichtdicke eines für Elektronen empfindlichen Polymers belegt wird. Dieses Polymer wird mit dem Elektronenstrahl bei der Belichtung zu einem Siliziumoxid-reichen Polymer vernetzt, das im Brechungsindex gut an das Fasermaterial angepaßt ist (n=1.48), siehe H.W.P. Koops, S. Babin, M. Weber, G. Dahm, A. Holopkin, M. Lyakhov, "Evaluation of dry resist Viny-T8 and its application to optical microlenses", Microelectronic Engineering 30 (1996), 539. Auf dem Laserende ist ein aus Siliziumoxid aufgebauter Spiegel aufgedampft, an den sich das Linsenmaterial ebenfalls gut im Brechungsindex anpaßt. Damit ist die Einfügedämpfung dieser aus Trockenlack gefertigten Linsen theoretisch zu vernachlässigen.

Mit der additiven Lithographie mit Elektronenstrahl-induzierter Deposition werden die Linsen aus aus der Gasphase adsorbierten Präkursor-Molekülen durch Elektronenstrahl-Polymerisation und -vernetzung unter Rechnersteuerung des Strahles und der Dosis direkt aufgebaut, ohne daß dazu eine vorherige Belegung oder anschließende Entwicklung der Struktur erforderlich ist. Ein solches Verfahren ist beschrieben in H.W.P. Koops, R. Weiel, D.P. Kern, T.H. Baum "High Resolution Electron Beam Induced Deposition", J. Vac. Sci, Technol. B 6(1), (1988), 477. Die benötigte Belichtungszeit ist jedoch im Vergleich zur Lacktechnik sehr viel höher, bleibt aber in vertretbaren Zeiten pro Linse.

Durch die Verwendung des leicht steuerbaren Elektronenstrahls im Rasterelektronenmikroskop ist zusätzlich die auf 100 nm genaue Plazierung des Belichtungsfeldes zum Faserkern und zur effektiven Zone des Lasers mit Bildverarbeitung und Rastermikroskopie möglich, was beispielsweise in H.W.P. Koops, J. Kretz, M. Weber, "Combined Lithographies for the Reduction of Stitching Errors in Lithography", Proc. EIPB94, J. Vac. Sci. Technol. B12 (6)(1994)3265-3269 beschrieben ist. Durch die Macro-Steuerung der Justierung und der Belichtung ist das Belichtungsverfahren programmgeführt automatisierbar.

Durch die Rechnerführung der Belichtung und der Vorberechnung der Dosisverteilung entsprechend gemessener Gradationskurven des Lack- oder Depositions-Prozesses lassen sich außer runden, elliptischen, sphärischen und hyperbolischen auch mit einem Ablenkprisma versehene und den Laserstrahl orientiert führende Linsenkombinationen in einer brechenden Fläche vereint ausführen und präzise justieren. Die Justierung und der Herstellungsprozeß sind in einem zusammengefaßt und den herkömmlichen Verfahren um mindestens eine Größenordnung überlegen. Dabei sind die leichte Steuerbarkeit und Bilddrehung bei der Elektronenstrahl-Belichtung ein z. B. der Laserablation überlegenes Verfahren zum Aufbau der Linsen. Diese Verfahren sind für den produktiven Einsatz leicht automatisierbar.

Ausführungsbeispiele der Erfindung sind in der Zeichnung anhand mehrerer Figuren schematisch dargestellt und in der nachfolgenden Beschreibung näher erläutert. Es zeigt:
- Fig. 1: ein Ausführungsbeispiel im y-z-Schnitt,
- Fig. 2: das Ausführungsbeispiel im x-z-Schnitt in einem entsprechend geänderten Maßstab und
- Fig. 3: ein weiteres Ausführungsbeispiel im x-z-Schnitt.

In einer Ebene 1 befindet sich eine anamorphotische plankonvexe Linse 2 mit den Brennpunkten F_{y} und -F_{y}. In der Ebene 3 liegt die Licht-Austrittsfläche eines ansonsten nicht dargestellten Festkörperlasers. Das Quellenbild liegt bei 4, wobei sich eine virtuelle vergrößerte Abbildung des Quellenbildes bei 5 ergibt.

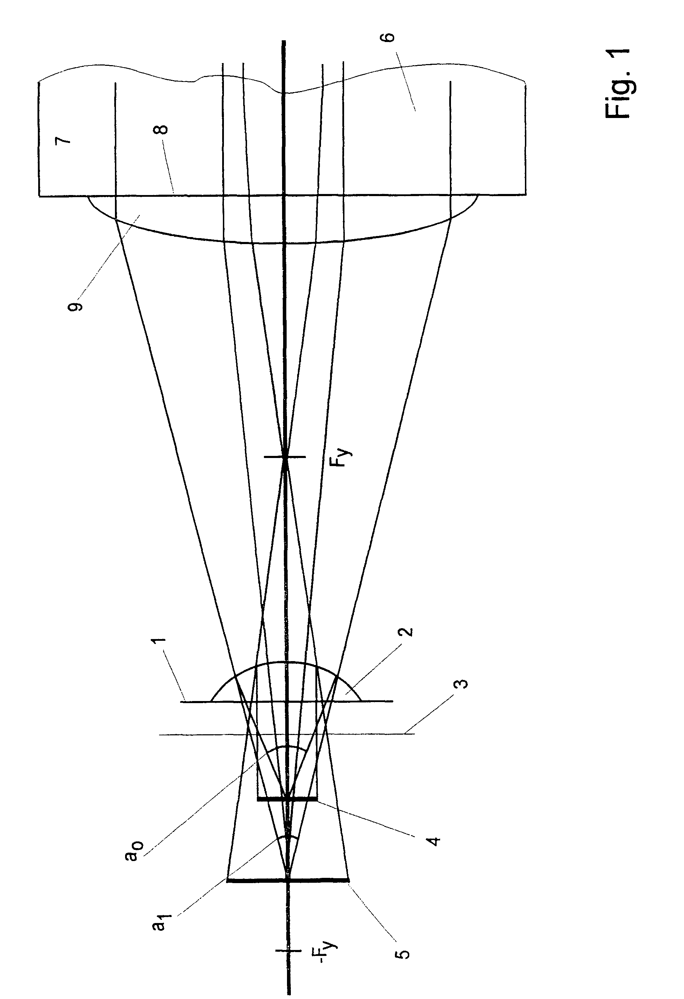

Da in dem y-z-Schnitt (Fig. 1) das aus der Austrittsfläche 3 austretende Licht praktisch nicht gebündelt ist, ist zur Erfassung eines möglichst großen Anteils des gesamten Lichtstromes eine große Apertur erforderlich, was bei dem dargestellten Ausführungsbeispiel dadurch erreicht wird, daß eine nicht allzu große Linse möglichst dicht an der Austrittsfläche 3 angeordnet ist - nämlich so dicht wie für eine virtuelle Abbildung möglich.

Der nur teilweise angedeutete Lichtwellenleiter besteht aus einem optisch aktiven Kern 6 und einem Mantel 7. Auf der Licht-Eintrittsfläche 8 ist eine sphärische Linse 9 aufgebracht, welche die virtuelle Abbildung 5 reell in den Kern 6 abbildet.

Der Übersichtlichkeit halber erfolgte die schematische Darstellung nicht maßstabsgetreu. Als Beispiel werden folgende Abmessungen angegeben: Die Brennweite der Linse und gleichzeitig etwa die Dicke einer Abstandsschicht zwischen der Linse 2 und der Ebene 3 beträgt f=1,43 um bei einem Brechungsindex der anamorphotischen Linse 2 von n=2,75 und einem Radius von R=3,9 um. Die Weite der Austrittsfläche beträgt d₀=0,3 µm, während der Durchmesser des Kerns 6 d₁=10 um beträgt. Die Aperturen sind a₀=45° und a₁=10°, die Vergrößerung V = 14 = B/g = 20/f.

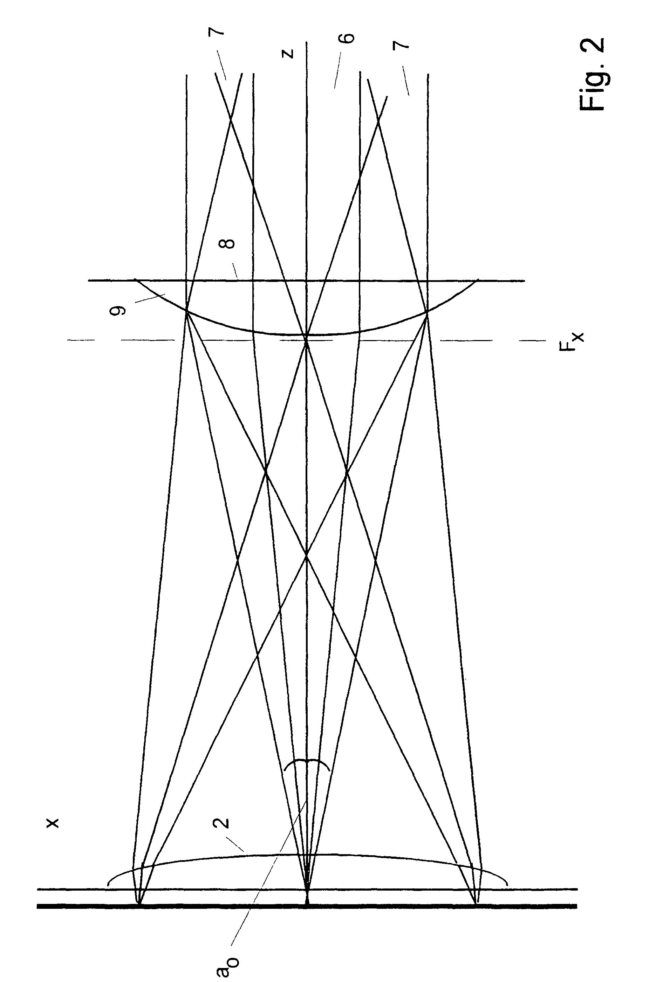

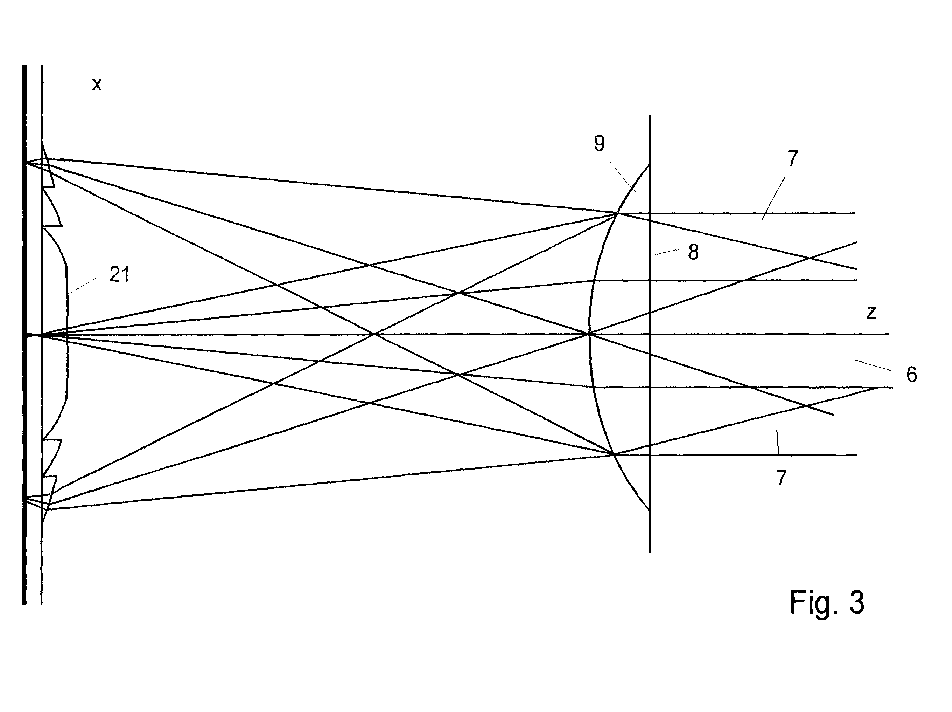

Fig. 2 zeigt das gleiche Ausführungsbeispiel im x-z-Schnitt. Hier ist auf der Austrittsfläche des Lasers eine im x-z-Schnitt langbrennweitige Linse oder Fresnel-Linse (im Falle des Ausführungsbeispiels nach Fig. 3) aufgebracht, mit der das Licht geringer Apertur a₀ auf die Linse 9 gebündelt wird.

## Patentansprüche

1. Optische Anordnung bestehend aus einem Festkörperlaser, einem Lichtwellenleiter und einem optischen System, wobei das zwischen der Austrittsfläche des Festkörperlasers und der Eintrittsfläche des Lichtwellenleiters angeordnete optische System in den Hauptschnitten des Festkörperlasers unterschiedliche Aperturen in im wesentlichen gleiche Aperturen an der Eintrittsfläche des Lichtwellenleiters umformt, **dadurch gekennzeichnet, daß** das optische System aus einem auf der Austrittsfläche (3) aufgebauten Linsensystem (2) mit unterschiedlichem Abbildungsmaßstab in den Hauptschnitten und einer auf der Eintrittsfläche (8) aufgebauten weiteren Linse (9) besteht und wobei das optische System derart gestaltet ist, eine Anpassung der Wellenfelder in Richtung beider Hauptschnitte zu erreichen.

2. Anordnung nach Anspruch 1, **dadurch gekennzeichnet, daß** die weitere Linse (9) sphärisch ist.

3. Anordnung nach einem der Ansprüche 1 oder 2, **dadurch gekennzeichnet, daß** das Linsensystem als Fresnel-Linse (21) ausgebildet ist.

4. Anordnung nach einem der Ansprüche 1 oder 2, **dadurch gekennzeichnet, daß** das Linsensystem von zwei gekreuzten zylindrischen Teillinsen gebildet ist und **daß** mindestens eine der Teillinsen als Fresnel-Linse ausgebildet ist.

5. Anordnung nach einem der Ansprüche 1 bis 4, **dadurch gekennzeichnet, daß** zwischen dem Linsensystem (2) und der Austrittsfläche (3) eine Abstandsschicht entsprechend der in der Richtung der größeren Apertur erforderlichen Vergrößerung vorgesehen ist.

6. Verfahren zur Herstellung einer optischen Anordnung bestehend aus einem Festkörperlaser, einem Lichtwellenleiter und einem optischen System, wobei das zwischen der Austrittsfläche des Festkörperlasers und der Eintrittsfläche des Lichtwellenleiters angeordnete optische System in den Hauptschnitten des Festkörperlasers unterschiedliche Aperturen in im wesentlichen gleiche Aperturen an der Eintrittsfläche des Lichtwellenleiters umformt, und wobei das optische System aus einem auf der Austrittsfläche aufgebauten Linsensystem mit unterschiedlichem Abbildungsmaßstab in den Hauptschnitten und einer auf der Eintrittsfläche aufgebauten weiteren Linse besteht, **dadurch gekennzeichnet, daß** mindestens die Linsen mit Hilfe einer Trockenlacktechnik hergestellt werden.

7. Verfahren nach Anspruch 6, **dadurch gekennzeichnet, daß** ferner Abstandsschichten und Antireflexschichten mit Hilfe der Trockenlacktechnik hergestellt werden.

8. Verfahren zur Herstellung einer optischen Anordnung bestehend aus einem Festkörperlaser, einem Lichtwellenleiter und einem optischen System, wobei das zwischen der Austrittsfläche des Festkörperlasers und der Eintrittsfläche des Lichtwellenleiters angeordnete optische System in den Hauptschnitten des Festkörperlasers unterschiedliche Aperturen in im wesentlichen gleiche Aperturen an der Eintrittsfläche des Lichtwellenleiters umformt, und wobei das optische System aus einem auf der Austrittsfläche aufgebauten Linsensystem mit unterschiedlichem Abbildungsmaßstab in den Hauptschnitten und einer auf der Eintrittsfläche aufgebauten weiteren Linse besteht, **dadurch gekennzeichnet, daß** mindestens die Linsen mit Hilfe additiver Lithographie, insbesondere Elektronenstrahl-Lithographie, hergestellt werden.

9. Verfahren nach Anspruch 8, **dadurch gekennzeichnet, daß** ferner Abstandsschichten und Antireflexschichten mit Hilfe der additiven Lithographie hergestellt werden.

## Claims

1. Optical arrangement consisting of a solid-state laser, an optical waveguide and an optical system, wherein the optical system, disposed between the exit surface of the solid-state laser and the entrance surface of the optical waveguide, converts different apertures in the principal sections of the solid-state laser into substantially identical apertures on the entrance surface of the optical waveguide, **characterized in that** the optical system consists of a lens system (2), mounted on the exit surface (3), with different linear magnifications in the principal sections and of a further lens (9) mounted on the entrance surface (8), the optical system being of such design as to obtain the matching of the wave fields in the direction of both principal sections.

2. Arrangement according to claim 1, **characterized in that** the further lens (9) is spherical.

3. Arrangement according to any one of claims 1 or 2, **characterized in that** the lens system is in the form of a Fresnel lens (21).

4. Arrangement according to any one of claims 1 or 2, **characterized in that** the lens system is formed by two crossed cylindrical part-lenses and at least one of the part-lenses is in the form of a Fresnel lens.

5. Arrangement according to any one of claims 1 to 4, **characterized in that** provided between the lens system (2) and the exit surface (3) is a spacing layer according to the magnification required in the direction of the larger aperture.

6. Process for producing an optical arrangement consisting of a solid-state laser, an optical waveguide and an optical system, wherein the optical system, disposed between the exit surface of the solid-state laser and the entrance surface of the optical waveguide, converts different apertures in the principal sections of the solid-state laser into substantially identical apertures on the entrance surface of the optical waveguide, and wherein the optical system consists of a lens system, mounted on the exit surface, with different linear magnifications in the principal sections and of a further lens mounted on the entrance surface, **characterized in that** at least the lenses are produced using a dry-lacquer technique.

7. Process according to claim 6, **characterized in that**, also, spacing layers and antireflection layers are produced using the dry-lacquer technique.

8. Process for producing an optical arrangement consisting of a solid-state laser, an optical waveguide and an optical system, wherein the optical system, disposed between the exit surface of the solid-state laser and the entrance surface of the optical waveguide, converts different apertures in the principal sections of the solid-state laser into substantially identical apertures on the entrance surface of the optical waveguide, and wherein the optical system consists of a lens system, mounted on the exit surface, with different linear magnifications in the principal sections and of a further lens mounted on the entrance surface, **characterized in that** at least the lenses are produced using additive lithography, especially electron-beam lithography.

9. Process according to claim 8, **characterized in that**, also, spacing layers and antireflection layers are produced using additive lithography.

## Revendications

1. Dispositif optique composé d'un laser solide, d'un guide d'onde optique et d'un système optique, dans lequel le système optique placé entre la face de sortie du laser solide et la face d'entrée du guide d'onde optique convertit différentes ouvertures dans les sections principales du laser solide en ouvertures globalement identiques sur la face d'entrée du guide d'onde optique, **caractérisé en ce que** le système optique est constitué d'un système de lentilles (2) monté sur la face de sortie (3) avec une échelle de reproduction différente dans les sections principales et une lentille supplémentaire (9) montée sur la face d'entrée (8), le système optique étant aménagé de manière à permettre une adaptation des champs d'ondes en direction des deux sections principales.

2. Dispositif selon la revendication 1 **caractérisé en ce que** la lentille supplémentaire (9) est sphérique.

3. Dispositif selon la revendication 1 ou 2 **caractérisé en ce que** le système de lentilles est monté en lentille de Fresnel (21).

4. Dispositif selon la revendication 1 ou 2 **caractérisé en ce que** le système de lentilles est constitué de deux sous-lentilles cylindriques croisées et qu'au moins une des sous-lentilles est montée en lentille de Fresnel.

5. Dispositif selon l'une des revendications 1 à 5 **caractérisé en ce que**, entre le système de lentilles (2) et la face de sortie (39), il est prévu une couche-entretoise adaptée à l'agrandissement nécessaire dans le sens de la grande ouverture.

6. Procédé de fabrication d'un dispositif optique composé d'un laser solide, d'un guide d'onde optique et d'un système optique, dans lequel le système optique placé entre la face de sortie du laser solide et la face d'entrée du guide d'onde optique convertit différentes ouvertures dans les sections principales du laser solide en ouvertures globalement identiques sur la face d'entrée du guide d'onde optique et le système optique est constitué d'un système de lentilles monté sur la face de sortie avec une échelle de reproduction différente dans les sections principales et une lentille supplémentaire montée sur la face d'entrée, **caractérisé en ce qu'**au moins les lentilles sont fabriquées en laque sèche.

7. Procédé selon la revendication 6 **caractérisé en ce que** des couches-entretoises et des couches antireflet sont de plus fabriquées en laque sèche.

8. Procédé de fabrication d'un dispositif optique composé d'un laser solide, d'un guide d'onde optique et d'un système optique, dans lequel le système optique placé entre la face de sortie du laser solide et la face d'entrée du guide d'onde optique convertit différentes ouvertures dans les sections principales du laser solide en ouvertures globalement identiques sur la face d'entrée du guide d'onde optique et le système optique est constitué d'un système de lentilles monté sur la face de sortie avec une échelle de reproduction différente dans les sections principales et une lentille supplémentaire montée sur la face d'entrée, **caractérisé en ce qu'**au moins les lentilles sont fabriquées par lithographie additive, en particulier par lithographie par faisceau d'électrons.

9. Procédé selon la revendication 8 **caractérisé en ce que** des couches-entretoises et des couches antireflet sont de plus fabriquées selon lithographie additive.
